Europäisches Patentamt

European Patent Office

Office européen des brevets

(11) Publication number: **0 393 332**

**A1**

# EUROPEAN PATENT APPLICATION

(21) Application number: **90103817.4**

(22) Date of filing: **27.02.90**

(51) Int. Cl.5: **C04B 41/50, C03C 8/02**

(30) Priority: **20.04.89 GB 8908965**

(43) Date of publication of application:
**24.10.90 Bulletin 90/43**

(84) Designated Contracting States:
**DE FR IT**

(71) Applicant: **T&N TECHNOLOGY LIMITED**
**Cawston House Cawston**
**Rugby Warwickshire, CV22 7SB(GB)**

(72) Inventor: **Hyndman, Christopher Patrick**
**52 Malvern Avenue**
**Rugby, Warwickshire CV22 5JW(GB)**

(74) Representative: **Gibson, George Kevin et al**
**Bowdon House Ashburton Road West**
**Trafford Park Manchester M17 1RA(GB)**

(54) **Treatment of reaction-bonded silicon nitride articles.**

(57) A reaction-bonded silicon nitride article is provided with a vitreous glaze by applying a mixture comprising a formulation of :-
35 to 45% by weight of manganese dioxide,
20 to 30% by weight of an alumina based composition having enhanced firing properties, and
30 to 40% by weight of silica,
together with a suitable binder. The applied mixture is fired at a temperature in the range 1200°C to 1350°C. The vitreous glaze softens at a temperature above 1000°C, has substantially the same coefficient of thermal expansion as silicon nitride, and is strongly adherent to the article. The vitreous glaze reduces the porosity of the reaction-bonded silicon nitride; and/or reduces the rate of oxidation of the reaction-bonded silicon nitride when heated at a temperature above 1100°C; and/or the treatment is employed to bond together two such glazed articles.

## Treatment of reaction-bonded silicon nitride articles

This invention relates to the treatment of reaction-bonded silicon nitride articles, and in particular, but not exclusively, either to the treatment of such articles to reduce the possible adverse effects of their inherent porosity; or to reduce the rate of oxidation of such articles when heated at a temperature greater than 1100°C.

A reaction-bonded silicon nitride article is advantageous because it has only negligible shrinkage during the firing step employed in its formation.

A reaction-bonded silicon nitride article can provide good electrical insulation. However, reaction-bonded silicon nitride has a high porosity, up to 20% of its volume comprising voids, enabling the absorption of water thereby. Such water absorption adversely affects the electrical insulation provided by the article.

It is known to impregnate reaction-bonded silicon nitride articles with a formulation of refractory metal oxides, inherently stable at temperatures greater than 1000°C, to reduce the porosity of the articles.

Alternatively, it is known to apply a layer of a suitable sealant to an article of reaction-bonded silicon nitride, to reduce its porosity. Such a sealant may comprise an epoxy resin applied under a vacuum, but epoxy resins decompose at temperatures less than 300°C.

It is also known to form on an article of reaction-bonded silicon nitride a vitreous glaze softening at a temperature less than 800°C. Such a glaze may be employed as a sealant, to reduce the porosity of the reaction-bonded silicon nitride article. In addition, or alternatively, such a vitreous glaze, or an epoxy resin, has been employed as an adhesive, in order to bond together at least two reaction-bonded silicon nitride articles.

Silicon nitride has the low coefficient of thermal expansion of $3.10^{-6}$ per degree Kelvin, significantly lower than the coefficient of thermal expansion of many of the known sealants, or adhesives, for a reaction-bonded silicon nitride article, and referred to above. These differences between the coefficient of thermal expansion of silicon nitride and of a known sealant, or adhesive, therefor implies that, if, under normally encountered conditions in the use of the articles, the temperature of the articles is above 300°C, a sealant, or adhesive, which does not decompose at such a temperature, tends to crack, or to become crazed, upon cooling, and so becomes porous.

It is an object of the present invention to provide a method of treating an article of reaction-bonded silicon nitride, the method comprising forming on the article a vitreous glaze which does not soften at a temperature below 1000°C, and which has a coefficient of thermal expansion, at least substantially, of $3.10^{-6}$ per degree Kelvin.

According to the present invention a method of treating an article of reaction-bonded silicon nitride comprises providing a mixture formed from a formulation of :-
35 to 45% by weight of manganese dioxide,
20 to 30% by weight of an alumina based composition having better sintering properties than alumina alone, and
30 to 40% by weight of silica,
together with a suitable binder, applying the mixture, in any convenient manner, to the surface of the article, and firing at a temperature in the range 1200°C to 1350°C to form a vitreous glaze on the article.

Such a vitreous glaze, provided by a treatment of a reaction-bonded silicon nitride article, in accordance with the present invention, is advantageous in that it softens at a temperature above 1000°C, and has a coefficient of thermal expansion, at least substantially, the same as that of the article. The vitreous glaze reduces the porosity of the reaction-bonded silicon nitride, and/or reduces the rate of oxidation of the reaction-bonded silicon nitride when heated at a temperature greater than 1100°C, and/or may be employed as an adhesive between two such glazed articles.

Preferably, the formulation has:-
39% by weight of manganese dioxide,
25% by weight of the alumina based composition, and
36% by weight of silica.

Another aspect of the present invention comprises an article of reaction-bonded silicon nitride having a vitreous glaze provided by a treatment method referred to above.

One particular treatment process in accordance with the present invention will now be described by way of example.

### EXAMPLE

A glaze formulation is prepared, comprising:-
35 to 45%, and, preferably, 39%, by weight of manganese dioxide,
20 to 30%, and, preferably, 25%, by weight of an alumina based composition having enhanced sintering properties, and sold under the name ALCOA A -1000 SG, and
30 to 40%, and, preferably, 36%, by weight silica.

Typically the alumina based composition comprises:-
99.7% by weight alumina,
0.08% by weight sodium monoxide,
0.02% by weight silica,
0.02% by weight ferric oxide,
0.02% by weight calcium oxide,
0.007% by weight boric oxide, and
0.05% by weight magnesium oxide

The density of the unfired composition is 2.14 grams per millilitre, and its density when fired at a temperature of 1540°C for one hour is 3.89 grams per millilitre.

A slurry is obtained by ball milling the formulation, for 16 hours, with distilled water, and sintered silicon nitride acting as a grinding medium.

The slurry is dried in an oven, at a temperature of 100-150°C, and the resulting solid material is passed through a 250 micrometre sieve.

The powder so obtained is stirred into a binder to provide a required mixture to be applied to the coated article. The binder comprises 5% by weight of ethyl cellulose powder dissolved in 95% by weight of 2-Ethoxyethanol, using a hot plate and a magnetic stirrer, and then cooled. The relative proportions of the powder, and of the binder, in the mixture are predetermined to be suitable for the selected method of application of a layer of the mixture to a reaction-bonded silicon nitride article. If the method of application comprises spraying the mixture onto the article, conveniently, the mixture comprises 10% by weight of the powder, and 90% by weight of the binder. Other possible methods of application include brushing, and dipping. The desired layer of the powder-binder mixture on the article may be obtained by successive applications of the mixture to the article, each application being dried before the next application is made.

When a layer of the powder-binder mixture has been obtained on the reaction-bonded silicon nitride article, it is fired at a temperature in the range 1200 to 1350°C, in air, and such that the temperature rises substantially at a rate of 100°C per hour. The mixture does not run in the firing step.

In this manner a vitreous glaze is provided on the surface of the reaction-bonded silicon nitride article. The vitreous glaze softens at a temperature above 1000°C, and has a coefficient of thermal expansion, at least substantially, of $3\times10^{-6}$ per degree Kelvin, at least substantially the same as the coefficient of thermal expansion of the silicon nitride. The vitreous glaze reduces the porosity of the reaction-bonded silicon nitride, and adheres strongly to the surface of the article.

Conveniently, at least, two reaction-bonded silicon nitride articles may be bonded together by the formulation-binder mixture being applied to their surfaces, and the vitreous glaze being formed on the articles by firing, with the articles contiguous with each other.

It may not be required that the glaze covers the whole of the surface of the article.

In some commercial applications it may be required that an article of reaction-bonded silicon nitride is subjected to a temperature greater than 1100°C for a prolonged period, say, of several days. Such a condition inevitably causes significant, adverse, oxidation of the article. However, if the article is treated in accordance with the present invention, and the vitreous glaze referred to above is provided thereon, the rate of such undesirable oxidation is reduced.

## Claims

1. A method of treating an article of reaction-bonded silicon nitride characterised by providing a mixture formed from a formulation of :-
35 to 45% by weight of manganese dioxide,
20 to 30% by weight of an alumina based composition having better sintering properties than alumina alone, and
30 to 40% by weight of silica,
together with a suitable binder, applying the mixture to the surface of the article, and firing at a temperature in the range 1200°C to 1350°C to form a vitreous glaze on the article.

2. A method as claimed in claim 1 characterised in that the formulation has:-
39% by weight of manganese dioxide,
25% by weight of the alumina based composition, and
36% by weight of silica.

3. An article of reaction-bonded silicon nitride having a vitreous glaze thereon, characterised in that the vitreous glaze is provided by applying to the surface of the article, and firing at a temperature in the range 1200°C to 1350°C, a mixture formed from a formulation of :-
35 to 45% by weight of manganese dioxide,
20 to 30% by weight of an alumina based composition having better sintering properties than alumina alone, and
30 to 40% by weight of silica,
together with a suitable binder.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | FR-A-2131571 (JOSEPH LUCAS LTD)<br>* page 1, line 1 - page 17 *<br>* page 3, lines 10 - 37 *<br>* page 4, lines 17 - 27 *<br>--- | 1-3 | C04B41/50<br>C03C8/02 |
| Y | CHEMICAL ABSTRACTS, vol. 106, no. 20, May 1987<br>Columbus, Ohio, USA<br>page 331; ref. no. 161520S<br>& JP-A-6230681(Jpn.Kokai Tokkyo Koho)09.02.1987<br>* abstract *<br>--- | 1-3 | |
| A | DE-A-2540015 (U.K. ATOMIC ENERGY AUTHORITY)<br>* page 2, line 18 - page 3, line 10; claims 1, 17, 22 *<br>* page 6, lines 12 - 18 *<br>* page 9, line 8 - page 10, line 4 *<br>* page 10, line 13 - page 11, line 2 *<br>--- | 1, 3 | |
| A | CHEMICAL ABSTRACTS, vol. 98, no. 4, January 1983<br>Columbus, Ohio, USA<br>page 266; ref. no. 21209P<br>&JP-A-57118081(Jpn Kokai Tokkyo Koho)22.07.1982<br>* abstract *<br>----- | 1-3 | TECHNICAL FIELDS SEARCHED (Int. Cl.5 )<br><br>C04B<br>C03C |

The present search report has been drawn up for all claims

| Place of search | Date of completion of the search | Examiner |
|---|---|---|
| THE HAGUE | 17 JULY 1990 | OLSSON S.A. |

EPO FORM 1503 03.82 (P0401)